Europäisches Patentamt

European Patent Office

Office européen des brevets

(11) Publication number: **0 000 503**

**A1**

# (12) EUROPEAN PATENT APPLICATION

(21) Application number: **78100371.0**

(22) Date of filing: **12.07.78**

(51) Int.Cl.²: **C 08 F 291/08**, C 08 F 283/06, C 08 G 65/32

(30) Priority: **13.07.77 US 815125**

(43) Date of publication of application:
**07.02.79 Bulletin 79/3**

(84) Designated contracting states:
**BE DE FR GB NL**

(71) Applicant: **THE DOW CHEMICAL COMPANY**
**2030 Abbott Road Midland,**
**Michigan 48640. (US)**

(72) Inventor: **Rains Carl Randall**
**148 Dallas Angleton**
**Texas. (US)**

(72) Inventor: **Blankenship Larry Thomas**
**318 Carnation Lake**
**Jackson County of Brazoria Texas. (US)**

(74) Representative: **Weickmann, Heinrich, Dipl.-Ing. et al**
**Postfach 860 820 Möhlstrasse 22**
**D-8000 München 86. (DE)**

(54) **Polymer dispersions in polyols containing unsaturation.**

(57) This invention is directed to stable dispersions of copolymers in polyols containing added unsaturation. The polymer dispersions are prepared by reacting a polyol containing added ethylenic unsaturation and an ethylenically unsaturated monomer or mixtures thereof in the presence of a free radical catalyst characterized in that the dispersion is prepared by the Williamson synthesis or a phase transfer catalyst modification thereof employing in situ polymerization of the ethylenically unsaturated monomer or mixtures thereof in the polymer containing added ethylenic unsaturation. The unsaturated polyols prepared by these methods may be used alone or they may be blended with polyols not containing added unsaturation. The dispersions are relatively low viscosity liquids which are useful in the preparation of polyurethanes such as, for example foams and elastomers.

POLYMER DISPERSIONS IN
POLYOLS CONTAINING UNSATURATION .

This invention is directed to a polymer dispersion prepared by reacting a polyol containing added ethylenic unsaturation and an ethylenically unsaturated monomer or mixture thereof in the presence of a free radical catalyst characterized in that the dispersion is prepared by the Williamson synthesis or a phase transfer catalyst modification thereof employing in situ polymerization of the ethylenically unsaturated monomer or mixture of monomers in the polyol containing added ethylenic unsaturation.

The stable dispersions of the present invention wherein the vinyl polymerization has been conducted in situ in an unsaturated polyol or polyol blend prepared by the above mentioned methods have lower viscosities as compared to those unsaturated polyols prepared from unsaturated compounds having a hydroxyl, a carboxyl or an epoxy group.

While dispersions of relatively low viscosity are known in the art, the dispersions of the present invention are even lower in viscosity for the same amount of polymer and ethylenic unsaturation in the polyol. The

18,402-F

lower viscosity allows for greater ease of handling in commercial urethane applications and for the incorporation of higher levels of dispersed polymer solids.

The term "added unsaturation" is employed since in some instances as disclosed in Polyurethanes:Chemistry and Technology I. Chemistry, Saunders and Frisch, Interscience, 1962, p. 35-36 some unsaturation is inherent in the preparation of polyether polyols when propylene oxide is employed with a basic catalyst. Therefore, the present invention is directed to quantities of unsaturation added by the methods disclosed.

The unsaturated polyols employed in the present invention are prepared preferably by the Williamson method wherein a conventional polyol is reacted with an alkali or alkaline earth metal hydroxide to form the metal alcoholate of the polyol and the resultant metal alcoholate is then reacted with an allyl halide or a vinylbenzyl halide.

The proportion of allyl halide or vinylbenzylhalide employed is such that on the average at least one hydroxyl group per molecule of polyol is not capped with the allyl or vinylbenzyl group. Preferably at least two hydroxyl groups per molecule are not capped.

The reaction between the polyol and the alkali or alkaline earth metal hydroxide is usually conducted at a temperature of from 80°C to 140°C, preferably from 100°C to 120°C for a time sufficient to essentially complete the reaction.

The reaction between the resulting metal alcoholate and the allyl halide or vinylbenzyl halide is conducted at a temperature of from 80°C to 140°C, preferably from 100°C to 120°C for a time sufficient to

18,402-F

essentially complete the reaction. Since the reaction results in the formation of a metal halide salt byproduct, such salt can be removed by such methods as, for example, filtration or centrifugation. In some instances it may be preferred to add some quantities of water, e.g. from 1 to 10 parts per part by weight of metal halide salt and then after removing the water by flashing or other means, removing the salt as indicated above.

Suitable alkali and alkaline earth metal hydroxides include, for example, sodium hydroxide, potassium hydroxide, lithium hydroxide, barium hydroxide, calcium hydroxide and mixtures thereof.

Suitable allyl halides include, for example, allyl chloride, allyl bromide, allyl iodide, allyl fluoride and mixtures thereof.

Suitable vinylbenzyl halides include, for example, vinylbenzyl chloride, vinylbenzyl bromide, vinylbenzyl iodide, vinylbenzyl fluoride and mixtures thereof.

The unsaturated polyols of the present invention are also prepared by a phase transfer catalysis modification of the traditional Williamson ether synthesis which employs an additional catalyst such as tetra-alkyl ammonium or phosphonium halides, sulfates or bisulfates.

In a preferred embodiment of the phase transfer catalyst modification, a polyol containing added ethylenic unsaturation is prepared by reacting a polyol having at least one primary or secondary alcoholic hydroxyl group, allyl halide or vinylbenzyl halide and an aqueous solution of an alkali metal hydroxide, the reaction being conducted in the presence of a catalytic amount of a quaternary ammonium or phosphonium salt having a total

18,402-F

carbon content of from 10 to 40 carbon atoms. The aqueous solution of an alkali metal hydroxide varies in concentration from 40 weight percent to a saturated solution of the alkali metal hydroxide. A saturated solution is preferred. The preferred catalysts are tetra-n-butyl ammonium salts. The preferred halide compounds are allyl chloride or vinylbenzyl chloride.

The unsaturated polyols prepared by these methods may be used alone or they may be blended with polyols not containing added ethylenic unsaturation. If a blend of polyols is employed, the level of added unsaturation can be easily adjusted to a desired level.

Suitable polyols which may be employed in the present invention include, for example, polyalkylene polyether polyols, polyhydroxyl-containing phosphorus compounds, and alkylene oxide adducts of polyhydric polythioethers, polyacetals, aliphatic polyols, and thiols, ammonia, and amines including aromatic, aliphatic and heterocyclic amines, as well as mixtures thereof well known in the art. Alkylene oxide adducts of compounds which contain two or more different groups within the above-defined classes may also be used such as, for example, amino alcohols which contain an amino group and a hydroxyl group.

Any suitable polyalkylene polyether polyol may be used such as, for example, the polymerization product of an alkylene oxide or of an alkylene oxide with a polyhydric alcohol having from 2 to 6 hydroxyl groups.

Polyethers which are preferred include the alkylene oxide addition products of trimethylolpropane, glycerine, pentaerythritol, sucrose, sorbitol, propylene glycol, and 2,2-(4,4'-hydroxyphenyl) propane and blends thereof having hydroxyl equivalent weights of from 250 to 5000.

Suitable polyhydric polythioethers which may be condensed with alkylene oxides include the condensation product of thiodiglycol or the reaction product of a dihydric alcohol such as disclosed above for the pre-
paration of the hydroxyl-containing polyethers with an-
other suitable thioether glycol.

Polyhydroxyl-containing phosphorus compounds
which may be used include those compounds disclosed in
U.S. Patent 3,639,542. Preferred polyhydroxyl-containing
phosphorus compounds are prepared from alkylene oxides
and acids of phosphorus having a phosphorus pentoxide
equivalency of from 72 percent to 95 percent.

Suitable polyacetals which may be condensed
with alkylene oxides include the reaction product of
formaldehyde or other suitable aldehyde with a dihydric
alcohol or an alkylene oxide such as those disclosed
above.

Suitable aliphatic thiols which may be condensed with alkylene oxides include alkane thiols con-
taining at least two -SH groups such as 1,2-ethane
dithiol, 1,2-propane dithiol, and 1,6-hexane dithiol;
alkene thiols such as 2-butene-1,4-dithiol; and alkyne
thiols such as 3-hexyne-1,6-dithiol.

Suitable amines which may be condensed with
alkylene oxides include aromatic amines such as aniline,
o-chloroaniline, p-amino aniline, 1,5-diamino naphthalene,
methylene dianiline, the condensation products of aniline
and formaldehyde, and 2,4-diamino toluene; aliphatic
amines such as methylamine, triisopropanolamine, isopro-
panolamine, diisopropanolamine, ethylenediamine, 1,2-
-propylenediamine, 1,4-butylenediamine, and 1,3-butylenediamine, and mixtures thereof.

As mentioned above, the present polymers of
the invention are prepared by the in situ polymerization

of the above-described unsaturated polyols with an ethylenically unsaturated monomer or a mixture of ethylenically unsaturated monomers.

Any of the polymerizable monomers known in the art can be used. Preferred monomers are styrene and acrylonitrile.

The proportion of ethylenically unsaturated monomer employed in the polymerization reaction is generally from 1 percent to 50 percent, preferably from 3 percent to 35 percent, based on the weight of the unsaturated polyol or polyol blend. Preferably the polymerization occurs by simultaneously adding at a steady or constant rate the monomer and a free radical catalyst to the unsaturated polyol at a temperature usually from about 80° to about 170°C, preferably from about 100° to 135°C. Optionally, the catalyst may be dispersed or dissolved in a portion of the polyol and thereafter be added along with the monomer to the remaining portion of the unsaturated polyol or polyol blend. Optionally the catalyst may be dissolved or dispersed in some solvent which does not detrimentally affect the course or rate of polymerization and does not detrimentally affect the useful character of the product and thereafter be added along with monomer to the unsaturated polyol or polyol blend. When an organic solvent is used, it is preferably removed by conventional means.

The concentration of the free radical catalyst can vary from 0.05 percent to 10 percent, preferably from 0.1 percent to 5 percent by weight based on the weight of the monomer. Suitable catalysts are well known in the art. Azobis(isobutyronitrile) is the preferred catalyst.

The polymer dispersions of the present invention are employed in the preparation of polyurethane

18,402-F

compositions, particularly polyurethane foams and elastomers. The polyurethane products are generally prepared by the reaction of the copolymer dispersions with an organic polyisocyanate, optionally in the presence of additional polyhydroxyl-containing components, chain-extending agents, catalysts, surface-active agents, stabilizers, blowing agents, fillers and pigments. Suitable processes for the preparation of elastomeric and cellular polyurethane plastics are well known in the art.

The polymer dispersions are preferably employed along with another polyhydroxyl-containing component commonly employed in the art. Any of the polyhydroxyl-containing components which are described above for use in the preparation of the polymer dispersions of the present invention may be employed along with the unsaturated polyols in the preparation of the polyurethane compositions of the present invention.

In the following examples and comparative runs, the amount of unsaturation was determined by proton NMR analysis. The unsaturation was calculated as weight percent allyl alcohol. This figure was then converted to moles of carbon-carbon double bonds (molecular weight 24) per mole of polyol.

EXAMPLES 1 THROUGH 9

To a reaction vessel fitted with stirrer, heating mantle and temperature control, condenser, thermometer, nitrogen gas inlet, and dropping funnel was added 3334 g (0.68 moles) of a polyol, designated as Polyol A, which was an adduct of glycerine and propylene oxide and subsequently end capped with 15 percent ethylene oxide by weight having an average OH equivalent weight of 1640 and 27.1 g

-8-

of sodium hydroxide. The mixture was heated to 110 to 120°C and after about 30 minutes 52 g (0.68 moles) of allyl chloride was added. After reacting at 100°C for 12 hours, the product was cooled to 60°C and 300 g deionized water and 50 g magnesium silicate were added. The water was stripped at 120°C and 2 to 3 mm mercury for 2 hours to precipitate the salts. The product was then filtered. The polyol with the added unsaturation was designated as Polyol B.

Polyol B has 1.4 moles of unsaturation per mole of polyol. Polyol A had 0.4 mole of unsaturation per mole of polyol. Polyol B therefore contained 1 mole of added unsaturation per mole of polyol.

The above prepared unsaturated Polyol B was used to prepare polymer dispersions according to the following general procedure. The unsaturated Polyol B was blended with Polyol A to give a predetermined level of unsaturation. The polyol blend was then heated to 120°C while nitrogen gas was bubbling through the blend. This was done in a 1-liter round bottom flask equipped with a mechanical stirrer, condenser, thermometer, heating mantle with temperature controller, addition funnel and nitrogen gas inlet. While the polyol was heating, styrene and acrylonitrile (VCN) were blended in a separate container. The monomer blend was prepared as a 50 percent solution by weight in a polyol blend of the same composition as that being heated. The monomer/polyol blend was then refrigerated to prevent polymerization. When the polyol in the reaction vessel reached 120°C, the nitrogen gas bubbling was switched to a static nitrogen gas pad. Azobis(isobutyronitrile) was then weighed into the cold monomer/polyol blend. The catalyst level was 0.7 weight percent based on the monomers. The monomer/polyol/catalyst blend was then added at a steady rate to the stirred hot

-0000503

polyol blend. The addition times ranged from 30 to 5' minutes but were typically 40 minutes. The total amount of monomer added was 25 weight percent based upon the weight of the polyol. The reaction was maintained at 120°C during the addition and for about one hour after the completion of the addition. The product was then cooled to ambient temperature. Viscosities were recorded using a Brookfield Viscometer, Model LVF, with a #4 spindle at 20 rpm and at ambient temperature (23 to 26°C).

COMPARATIVE RUNS A THROUGH I

Into a reaction vessel equipped with a stirrer, heating mantle and temperature controller, condenser, thermometer and nitrogen gas inlet was added 3800 g (0.77 moles) of Polyol A, 88 g (0.77 moles) of allyl glycidyl ether and 3.8 g of sodium hydroxide. After heating at 100°C for 12 hours, 25 g of magnesium silicate were added. The product was stripped at 110°C and 1 to 3 mm mercury for about 3 hours. The product was then filtered. A polyol, designated as Polyol C, which contained 1.4 moles of unsaturation per mole of polyol was recovered. Polyol C therefore contained 1 mole of added unsaturation. The unsaturated Polyol C was used to prepare polymer dispersions according to the general procedure in Examples 1 through 9. The results of the comparison are shown in Table I.

BAD ORIGINAL

18,402-F

TABLE I

| VCN/Styrene weight ratio | Moles unsaturation per mole of polyol mixture | | Examples 1 through 9 | Comparative Runs A through I | Percent Reduction in Viscosity |
|---|---|---|---|---|---|
| | Totals | Added | Viscosity in Centipoise | | |
| 80/20 | 0.5 | 0.1 | 1150 | 1650 | 30.3 |
| 80/20 | 0.9 | 0.5 | 1250 | 1650 | 24.2 |
| 80/20 | 1.3 | 0.9 | 1100* | 1800 | 38.9 |
| 70/30 | 0.5 | 0.1 | 1450 | 1650 | 12.1 |
| 70/30 | 0.9 | 0.5 | 1300 | 1800 | 27.8 |
| 70/30 | 1.3 | 0.9 | 1150 | 1950 | 41.0 |
| 60/40 | 0.5 | 0.1 | 1650 | 1600* | 3.1 (increase) |
| 60/40 | 0.9 | 0.5 | 1450 | 1700 | 14.7 |
| 60/40 | 1.3 | 0.9 | 1600 | 1800 | 11.1 |

The viscosity of Polyol A before blending was 990 centipoise at 25°C.

The viscosity of Polyol B before blending was 950 centipoise at 25°C.

The viscosity of Polyol C before blending was 1100 centipoise at 25°C.

*These values may be artificially low since the polymerization temperature rose to 130°C.

The above data clearly demonstrates that the polymer dispersions of the present invention are generally lower in viscosity than those of the prior art.

EXAMPLE 10

780 g of a polyol prepared by reacting Polyol A with allyl chloride in the manner of the present invention as described in Examples 1 through 9 containing 0.8 mole of added unsaturation per mole of polyol and 20 g Polyol A were weighed into a flask equipped with a stirrer, heating mantle and temperature control, nitrogen gas inlet, thermometer, condenser and addition funnel. The polyol blend was heated to 120°C while being sparged with a stream of nitrogen gas. 200 g of styrene monomer containing 0.7 weight percent azobis(isobutyronitrile) catalyst were added over the course of about an hour. The product was digested at 120°C for 40 minutes after completion of the addition of styrene monomer. The product was cooled to 90°C and was stripped of unreacted styrene at 1 mm mercury for 50 minutes. The product was a tan dispersion containing 10.4 weight percent polymer solids and having a Brookfield viscosity of 1200 centipoise at ambient temperature. The dispersion did settle out after 3 weeks storage at 25°C but could be redispersed by agitation.

EXAMPLE 11

A polyol containing added unsaturation by the procedure of Examples 1 through 9 be heating a mixture of 3232 g (0.66 mole) of Polyol A and 26.4 g (0.66 mole) sodium hydroxide. After purging with nitrogen, 101 g (0.66 mole) of vinylbenzyl chloride was added over a one hour period. The mixture was digested for two hours at 100°C. To the mixture was added 35 g of magnesium silicate. The crude product was vacuum stripped at 110°C for two hours. The subsequently filtered product had 0.8 mole of added unsaturation and is designated as Polyol D.

The procedure of Example 10 above was repeated using 80 g of Polyol D and 320 g of Polyol A. A dispersion was then prepared using 101 g of styrene monomer and 2 g of azobis(isobutyronitrile). After stripping the product was a smooth white stable dispersion containing 17.4 weight percent polymer solids and having a Brookfield viscosity of 1100 centipoise at ambient temperature (25°C).

COMPARATIVE RUN J

The procedure in Example 10 was repeated with the exception that Polyol A was the only polyol used. 797 g Polyol A, 200 g styrene monomer and 1.4 g azobis-(isobutyronitrile) were reacted according to the procedure in Example 10. Upon cooling to 90°C after digestion agglomeration of the polymer was observed. Further cooling caused the polymer to form a solid ball about 1-1/2 inches (4.3 cm) in diameter. No dispersion was formed.

This comparative run demonstrates that whatever unsaturation is present in the base polyol due to the rearrangement of propylene oxide to allyl alcohol is not as effective in promoting the formation of a dispersion as the unsaturation introduced in the manner of the present invention.

EXAMPLE 12

270 g of Polyol A and 30 g of Polyol D were heated to 120°C under a nitrogen purge. A solution of 50 g acrylonitrile, 50 g alpha-methylstyrene, 2 g azobis-(isobutyronitrile) and 100 g of a polyol blend containing 90 parts Polyol A and 10 parts of Polyol D was added dropwise to the hot polyol blend over a period of 35 minutes. The resultant dispersion contained 18.5 percent polymer solids and had a Brookfield viscosity of 4300 centipoise at ambient temperature (25°C).

18,402-F

EXAMPLE 13

270 g of Polyol A and 30 g of Polyol B were heated to 120°C under a nitrogen purge. A solution of 100 g methacrylonitrile, 2 g azobis(isobutyronitrile) and 100 g of a polyol blend containing 50 parts of Polyol A and 50 parts Polyol B was added dropwise over a period of 40 minutes. The resultant dispersion contained 19.5 percent polymer solids and had a Brookfield viscosity of 1950 centipoise.

EXAMPLE 14

270 g of Polyol A and 30 g of Polyol D were weighed into a flask according to the procedure in Example 1. 57 g of styrene monomer, 43 g of methylmethacrylate and 2 g azobis(isobutyronitrile) dissolved in 50 g Polyol A and 50 g Polyol D were added over a 30 minute period while the reaction mixture was maintained at 120°C. The product was digested at 120°C for 50 minutes and at 90°C for an hour. The product was vacuum stripped (less than 1 mm mercury) at 90°C for an hour. The resultant dispersion contained 14.9 percent polymer solids and had a Brookfield viscosity of 8750 centipoise at 20°C.

COMPARATIVE RUN K

A reaction vessel fitted with stirrer, heating mantle with temperature controller, condenser, thermometer, nitrogen gas inlet, and dropping funnel was charged with (a) 1522 g (0.31 mole) of a 4907 molecular weight triol, designated Polyol E, which was an adduct of glycerine and propylene oxide and subsequently end capped with 13 weight percent ethylene oxide, (b) 980 g (0.41 mole) of a 2383 molecular weight diol which was an adduct of propylene glycol and propylene oxide and subsequently end capped with 15 weight percent ethylene oxide, and (c) 76 g (0.78 mole) of maleic anhydride. The charge was heated to 130°C and digested for five hours and then cooled to room tempera-

18,402-F

ture. After the product was cooled, 2500 g of the product was heated to 150°C. Then 170 g of ethylene oxide was gradually added over a 3 hour period. Upon completion of the oxide addition, the reaction mixture was maintained at 150 to 170°C for 3 hours, after which time it was stripped at 130°C for 3 hours at less than 10 mm of mercury. The product, designated Polyol F, was an amber fluid.

A polymer dispersion employing Polyol F was prepared following the teaching found in U.S. Patent 4,014,846, column 12. A reaction vessel equipped with a stirrer, condenser, heating mantle with controller, addition funnel and nitrogen inlet was charged with 200 g isopropanol, 50 g of Polyol E, 200 g acrylonitrile, 50 g styrene, 0.4 g tert-dodecyl mercaptan and 1.25 g azobis-(isobutyronitrile). The charge was heated to 75°C for 5 hours. At the end of this period the product was a milky fluid. The polymer dispersion was cooled to room temperature.

180 g of the polymer dispersion as prepared above was mixed with 450 g of Polyol E. The mixture was heated to 100°C with stirring and stripped at a vacuum of 1 mm of mercury. The Brookfield viscosity of this mixture at 24°C was 1850 cps. After standing for 5 days at room temperature, a noticeable separation of the dispersion into distinct layer was observed.

18,402-F

1. A polymer dispersion prepared by reacting a polyol containing added ethylenic unsaturation and an ethylenically unsaturated monomer or mixtures thereof in the presence of a free radical catalyst characterized in that the dispersion is prepared by the Williamson synthesis or a phase transfer catalyst modification thereof employing in situ polymerization of the ethylenically unsaturated monomer or mixture of monomers in the polyol containing added ethylenic unsaturation.

2. The polymer dispersion of Claim 1 characterized in that the proportion of ethylenically unsaturated monomers employed in the reaction is from 1 to 50 weight percent based on the weight of the polyol.

3. The polymer dispersion of Claim 1 characterized in that allyl chloride is employed in the Williamson method or the phase transfer catalyst modification thereof.

4. The polymer dispersion of Claim 1 characterized in that vinylbenzyl chloride is employed in the Williamson method or the phase transfer catalyst modification thereof.

5. The polymer dispersion of Claim 1 characterized in that the polyol containing added ethylenic unsaturation is mixed with polyols not containing added ethylenic unsaturation.

0000503

European Patent
Office

EUROPEAN SEARCH REPORT

Application number

EP 78 10 0371

## DOCUMENTS CONSIDERED TO BE RELEVANT

| Category | Citation of document with indication, where appropriate, of relevant passages | Relevant to claim |
|---|---|---|
| | DE - A - 2 333 301 (DOW CHEMICAL)<br>* Claim 1; page 3, paragraph 3, example 1 * | 1,2,4 |
| A | FR - A - 2 182 070 (BASF)<br>* Page 4, line 7; claim 1 * | 3 |
| A | FR - A - 1 541 982 (I.C.I.)<br>* Abstract B 1,3 * | 4 |
| A | FR - A - 2 256 936 (EVRANE)<br>* Page 5, lines 35,36 * | 5 |
| A | CHEMICAL ABSTRACTS, vol. 84, no. 12, March 22, 1976, page 31, 75017d Alkyleneglycol ether.<br>& JP 75 103 205<br>* Abstract * | 1,3 |

### CLASSIFICATION OF THE APPLICATION (Int. Cl.³)

C 08 F 291/08
C 08 F 283/06
C 08 G 65/32

### TECHNICAL FIELDS SEARCHED (Int.Cl.³)

C 08 F 291/08
C 08 F 283/00
C 08 F 283/06
C 08 F 283/08
C 08 F 261/00
C 08 F 261/02
C 08 F 261/04
C 08 G 65/32

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-10-1978 | MEULEMANS |

EPO Form 1503.1  06.78